# FASCICULE DE BREVET EUROPEEN

(11) **EP 3 004 692 B1**
(45) Date de publication et mention de la délivrance du brevet: **01.07.2020**
(21) Numéro de dépôt: 14729416.9
(22) Date de dépôt: 13.05.2014
(51) Int. Cl.: F16H 57/04, F16D 23/06

(54) **BOÎTE DE VITESSE AVEC UNE LUBRIFICATION D'UN SYNCHRONISEUR**
GETRIEBE MIT SCHMIERUNG EINES SYNCHRONGETRIEBES
TRANSMISSION WITH LUBRICATION OF A SYNCHROMESH

(30) Priorité: 29.05.2013 FR 1354857
(43) Date de publication de la demande: 13.04.2016
(73) Titulaire: Technoboost, 75116 Paris (FR)
(72) Inventeur: WASCHEUL, Michael, F-78260 Acheres (FR); GIANNONI, Marc, F-75009 Paris (FR); RENAULT, Aurelien, F-78320 Levis St Nom (FR)
(74) Mandataire: Fernandez, Francis Lionel
(86) Numéro de dépôt international: PCT/FR2014/051105
(87) Numéro de publication internationale: WO 2014/191646

(56) Documents cités:
- DE-A1-102007 045 368

## Description

L'invention concerne un dispositif de lubrification passif de la mécanique interne d'une boîte de vitesses.

L'invention a pour but d'optimiser la lubrification de la mécanique interne d'une boîte de vitesses d'un véhicule notamment automobile, de manière dite passive, sans adjonction de pompe de lubrification.

L'invention trouve une application particulièrement avantageuse dans le domaine des boîtes de vitesses mécaniques pour véhicule automobile.

Les véhicules comportent une chaîne de traction formée par un organe de propulsion (formé par un moteur thermique et/ou machine électrique), un embrayage, et une boîte de vitesses qui entraîne les roues du véhicule.

L'embrayage est relié d'une part à l'organe de propulsion et d'autre part à la boîte de vitesses, elle-même reliée aux roues du véhicule.

Une boîte de vitesses comporte un arbre primaire relié à l'embrayage et un arbre secondaire relié aux roues du véhicule, ces deux arbres étant reliés entre eux par l'intermédiaire d'engrenages formant autant de rapports de démultiplication de vitesses que de rapports de vitesses.

Chaque engrenage comporte un moyeu lié en rotation à un des arbres dit primaire, un pignon fou monté fou sur ce même arbre primaire et une roue liée en rotation sur l'arbre dit secondaire, cette roue étant en engrènement avec le pignon fou qui se retrouve entraîné en rotation par la roue et donc par l'arbre secondaire.

Lorsqu'un rapport de vitesse particulier est sollicité, le moyeu et le pignon fou s'accouplent, entrainant ainsi la roue correspondante de l'arbre secondaire (et donc les roues du véhicule) avec une vitesse dépendant du diamètre de cette roue de l'arbre secondaire.

Au contraire, le moyeu et le pignon fou associés à un rapport de vitesse donné sont désaccouplés lorsque ledit rapport de vitesse donné n'est pas sollicité. Lorsqu'ils sont désaccouplés, le moyeu et le pignon fou peuvent ainsi présenter des vitesses de rotation différentes, le moyeu ayant celle de l'arbre primaire et le pignon fou, celle de l'arbre secondaire qui est celle des roues du véhicule.

Or lorsqu'un engrenage de ce type est sollicité, c'est pour que la vitesse de l'arbre primaire soit transmise par son intermédiaire à l'arbre secondaire et ainsi aux roues du véhicule.

Il est alors nécessaire d'accoupler le moyeu et le pignon qui présentent pourtant des vitesses de rotation différentes comme mentionné ci-dessus.

A cet effet, il faut d'abord obtenir une synchronisation de la vitesse de rotation de ce moyeu et du pignon monté fou.

Pour cela, un synchroniseur ou dispositif de synchronisation est interposé entre le moyeu et le pignon fou.

Ce dispositif de synchronisation est formé par des bagues de friction coniques qui coopèrent avec le moyeu et avec le pignon fou afin de lier en rotation le moyeu avec le pignon fou.

Plus précisément, les bagues de friction sont généralement formées par au moins un stator lié en rotation au moyeu et par au moins un rotor, lié en rotation au pignon fou. La plupart des synchroniseurs comporte n stators et n rotors. Ces bagues sont disposées les unes à l'intérieur des autres en respectant une alternance rotors/stators.

Il y a synchronisation des vitesses de rotation du moyeu et du pignon fou et couplage du moyeu avec le pignon fou lorsque les différentes bagues se frottent les unes contre les autres jusqu'à elles soient solidarisées les unes avec les autres. Pour que le frottement se produise, un manchon baladeur est déplacé vers les bagues de manière à ce que les bagues glissent les unes à la suite des autres et que des frottements se produisent entraînant la synchronisation progressive du moyeu avec le pignon fou. Le manchon est disposé autour du moyeu et est en liaison glissière avec le moyeu. Ce manchon est commandé de manière connue par un mécanisme d'entraînement de type fourchette.

Ces éléments tournants et en contact les uns des autres, nécessitent d'être enduits d'un film de fluide de lubrification, généralement de l'huile, pour assurer leur bon fonctionnement.

A cet effet, divers systèmes sont actuellement adoptés : la lubrification par gravité et la lubrification par gavage externe ou interne à la boîte de vitesses opéré par une pompe électrique ou mécanique.

Le système de lubrification par gravité nécessite d'attendre que le barbotage des pignons et des autres éléments tournants, dans l'huile présente en partie basse de boîte de vitesses, véhicule cette huile vers le haut de la boîte de vitesses pour obtenir une circulation d'huile suffisante pour remplir ensuite par gravité l'intérieur des arbres tournant. Ce système de lubrification n'est donc pas optimal à froid dès les premiers tours moteurs.

Le système de lubrification par pompe représente un coût, un poids supplémentaires, sont consommateurs en CO₂ et requièrent un temps de montage supplémentaires.

DE10 2007 045368 A1 divulgue une boîte de vitesses selon le préambule de la revendication 1.

L'invention vise à pallier ces inconvénients.

A cet effet, l'invention concerne une boîte de vitesses d'un véhicule notamment automobile, comprenant :
- un moyeu monté solidaire en rotation autour d'un premier arbre de la boîte de vitesses,
- un pignon monté fou autour de ce même arbre et susceptible d'engrener une roue montée solidaire en rotation autour d'un deuxième arbre de la boîte de vitesses, le moyeu et le pignon fou définissant respectivement deux faces avant à proximité l'une de l'autre et étant destinés à s'accoupler l'un à l'autre, par l'intermédiaire d'un manchon d'un synchroniseur de la boîte de vitesse, le manchon étant monté autour du moyeu et du pignon lorsqu'un rapport de vitesses est sélectionné, et
- un moyen d'acheminement d'un fluide de lubrification vers des parois latérales internes du pignon et du moyeu.

Selon l'invention, les deux faces du moyeu et du pignon définissent ensemble au moins une gorge d'acheminement du fluide de lubrification depuis les parois latérales internes du moyeu et du pignon jusqu'aux bords latéraux de ces faces en regard (11, 12) du moyeu et du pignon, et au moins une poche de stockage de ce liquide en périphérie de ces faces en regard (11, 12) du moyeu et du pignon afin de lubrifier le synchroniseur. En plus, selon l'invention, chaque poche de stockage est formée par un creux réalisé dans la face avant du moyeu ou du pignon à partir de la périphérie de cette face, et s'arrêtant à distance de la paroi latérale interne de ce moyeu ou de ce pignon.

Le dispositif selon l'invention peut comprendre l'une ou l'autre des caractéristiques suivantes:
- le moyeu et le pignon comprennent chacun une partie proéminente formant un manchon, les deux manchons pointant l'un vers l'autre par leurs bords frontaux respectifs qui définissent les faces avant du moyeu et du pignon
- chaque gorge d'acheminement du fluide de lubrification est formée par une rainure réalisée dans la face avant du moyeu ou du pignon et débouchant à la fois sur la paroi latérale interne et sur une paroi latérale externe de la face avant du moyeu ou du pignon
- le creux d'une poche de stockage s'étend sur une portion de la paroi latérale externe délimitant la face du manchon du moyeu ou du pignon
- l'ensemble des rainures et des creux est porté par l'un ou l'autre du moyeu ou du pignon,
- le moyeu ou le pignon doté de l'ensemble des rainures d'acheminement et des poches de stockage est fabriqué par frittage
- la face avant du pignon ou du moyeu dépourvu de rainure d'acheminement ou de poche de stockage, est plane
- la boîte de vitesses comporte en outre un arbre primaire portant le moyeu et le pignon fou, un arbre secondaire portant une roue engrenant le pignon fou et un synchroniseur interposé latéralement entre une partie périphérique du moyeu et une partie périphérique du pignon, au niveau de leurs faces avant, chaque gorge d'acheminement du fluide de lubrification et chaque poche de stockage de ce fluide débouchant sur le synchroniseur pour l'alimenter en fluide de lubrification.

L'invention concerne aussi un moyeu de boîte de vitesses comprenant une paroi latérale interne circulaire par laquelle le moyeu est susceptible d'être monté sur un arbre, une paroi latérale externe destinée à être disposée à proximité d'un dispositif de synchronisation, et une face avant destinée à venir en regard d'une face avant d'un pignon, avec lequel le moyeu est susceptible de s'accoupler.

Selon l'invention, la face avant du moyeu comprend une rainure débouchant sur la paroi latérale interne et sur une paroi latérale externe du moyeu et un creux réalisé à partir de la paroi latérale externe de ce moyeu et s'arrêtant à distance de la paroi latérale interne.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 montre une coupe transversale partielle du dispositif selon l'invention intégré au sein d'une boîte de vitesse,
- la figure 2 illustre un mode de réalisation d'un moyeu du dispositif selon l'invention coopérant avec le pignon fou de la figure 1,
- la figure 3 représente un mode de réalisation du pignon fou du dispositif selon l'invention.

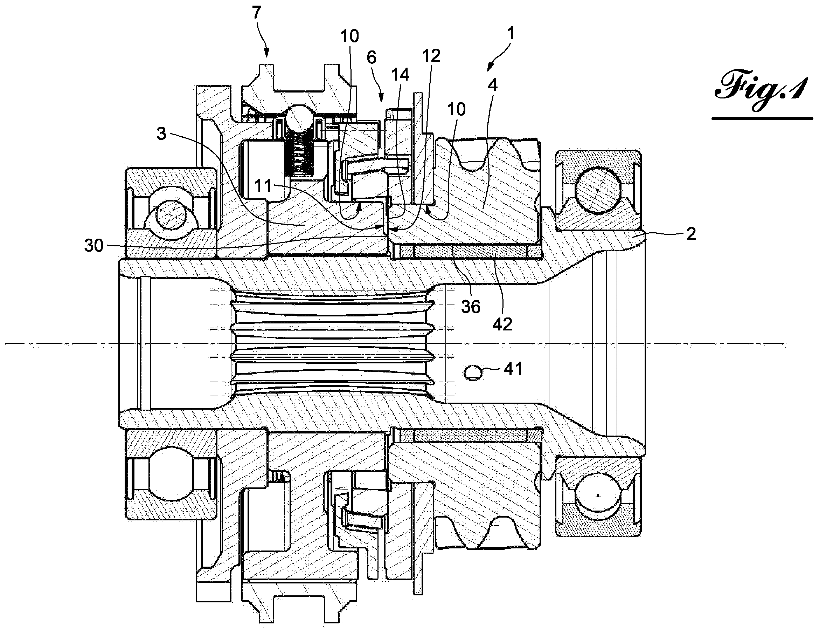

Le dispositif selon l'invention s'intègre au sein d'une boîte de vitesse repérée par 1 sur la figure 1, pour assurer, sans surcoût supplémentaire, et y compris à froid et surtout dès les premiers tours moteurs, une lubrification entre les moyeux de synchroniseur et les pignons disposés en vis-à-vis.

Cette figure représente en coupe, un arbre primaire 2 de la boîte de vitesses, lié au moteur du véhicule, un moyeu monté sur cet arbre 2 solidaire en rotation, un pignon 4 monté fou sur ce même arbre 2 et un dispositif de synchronisation 6 des vitesses de rotation du moyeu 3 et du pignon monté fou interagissant comme explicité précédemment.

Le dispositif de synchronisation comprend des bagues de friction coniques disposées entre le moyeu 3 et le pignon fou 4. Ces bagues sont formées par au moins un stator lié en rotation au pignon 4.

Le dispositif de synchronisation 6 comprend également un manchon 7 qui est disposé en liaison glissière avec le moyeu 3. Ce manchon permet d'exercer un effort axial sur le stator de plus grand diamètre, afin de générer un couple par friction de l'ensemble des stators et des rotors entraînant en rotation le pignon fou 4 avec le moyeu 3. Ce manchon est commandé de manière connue par un mécanisme d'entraînement de type fourchette et d'un actionneur, par exemple hydraulique ou électrique. Le manchon est lié en rotation au moyeu 3 mais est mobile pour permettre l'accrochage du moyeu 3 avec le pignon fou 4.

Lorsque tous les stators et les rotors sont liés les uns avec les autres par friction, le pignon fou 4 s'accouple au moyeu 3 par crabotage ou autre mécanisme d'accrochage. La vitesse de rotation de l'arbre secondaire (non représenté) est donc liée à la vitesse de rotation du moteur. Lorsque le moteur ralentit, la vitesse de rotation des roues est ralentie pour obtenir une décélération du véhicule. Lorsque le moteur accélère, la vitesse de rotation augmente pour obtenir une accélération du véhicule.

Lorsque le véhicule est à l'arrêt, moteur arrêté, aucun rapport de vitesse n'est engagé. Le pignon 4 n'est pas accouplé au moyeu 3, le moyeu 3 et les stators d'une part, le pignon 4 et les rotors d'autre part, sont statiques.

Lorsque le véhicule est en déplacement, le moteur en marche, un rapport de vitesse est engagé. Les bagues sont amenées au contact les unes par rapport aux autres suivant leur ordre de positionnement les unes par rapport aux autres. Les stators et les rotors sont liés en rotation et tournent à la même vitesse. C'est la synchronisation.

Pour assurer un bon fonctionnement de la boîte de vitesses, il est nécessaire d'acheminer de l'huile à l'intérieur du synchroniseur pour le refroidir durant son fonctionnement mais aussi de déposer un film d'huile sur les divers cônes de friction et faces d'appui, ainsi que sur les dents de manchon et couronnes crabots afin d'éviter tout problème de grippage et d'usure prématurée.

Selon l'invention, cet acheminement s'effectue sans pompe de lubrification additionnelle et sans attendre que le cycle de barbotage nécessaire à la bonne mise en œuvre de la lubrification par gravité, ne soit terminé.

A cet effet, l'invention prévoit que le moyeu et le pignon soient configurés de façon à distribuer l'huile de lubrification aux éléments composant le synchroniseur 6.

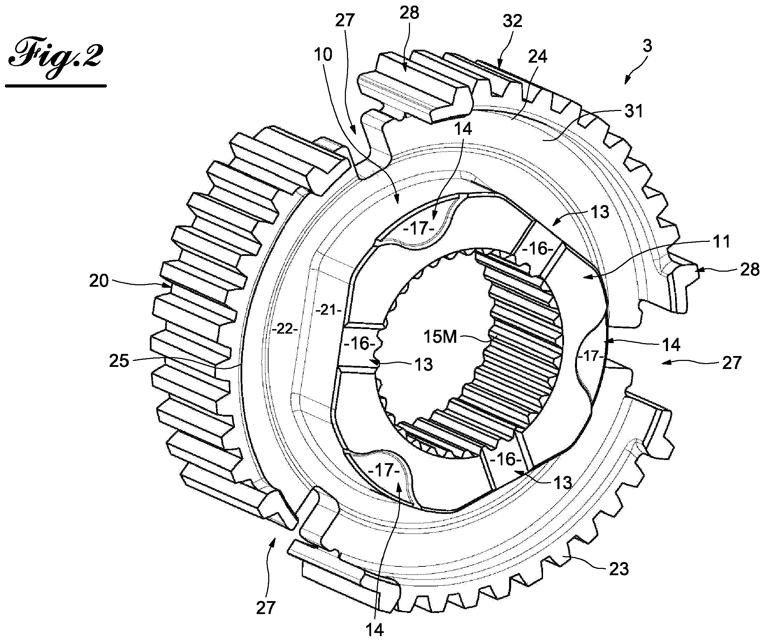

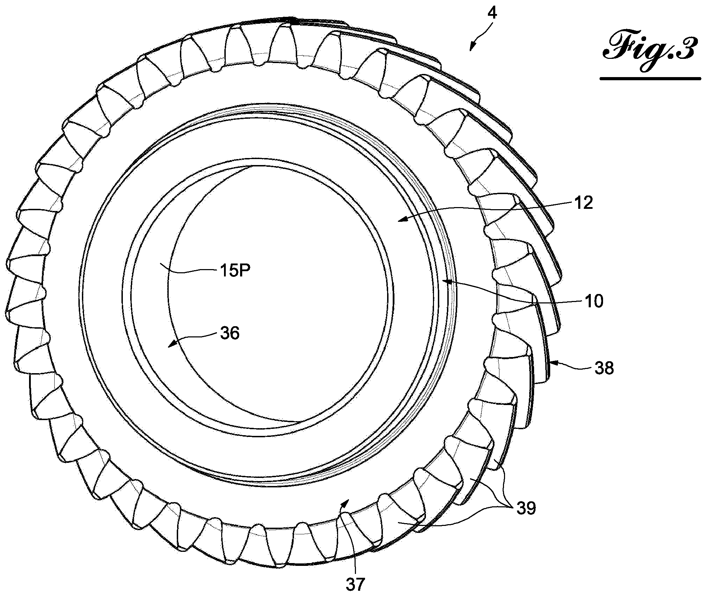

Plus précisément, comme déductible des figures 2 et 3, les deux faces en regard 11, 12 du moyeu 3 et du pignon 4 définissent ensemble des gorges d'acheminement du fluide de lubrification 13 depuis les parois internes 15M, 15P du moyeu 3 et du pignon 4 jusqu'aux bords latéraux de ces faces frontales en regard 11, 12 du moyeu et du pignon, et des poches de stockage de ce liquide 14 disposées en périphérie des faces en regard 11, 12 du moyeu 3 et du pignon 4 afin de lubrifier le dispositif de synchronisation de la boîte de vitesses.

Dans l'exemple représenté, les gorges d'acheminement du liquide 13 sont au nombre de trois et réparties à 120° l'une de l'aute, et les poches de stockage 14 sont également au nombre de trois, interposées chacune entre deux gorges d'acheminement et à équidistance de ces gorges.

Elles sont formées sur des parties proéminentes du moyeu 3 et du pignon 4, qui sont en forme de manchon, et dont les bords frontaux 11, 12 sont disposés en regard l'un de l'autre, à très faible distance l'un de l'autre comme l'illustre la figure 1, et définissent les faces avant susmentionnées 11, 12, et dont les parois latérales externes 10 qui dépassent de la couronne principale 20 du moyeu ou du pignon, se retrouvent, comme l'illustrent la figure 1, à proximité du dispositif de synchronisation 6.

Plus précisément, chaque gorge d'acheminement 13 est formée par un cran de graissage ou rainure rectiligne 16 réalisée dans la face avant du moyeu 3 débouchant sur la paroi interne 15M et sur une portion plane 21 de la paroi latérale externe 10 du manchon du moyeu 3 et visible sur la figure 2, et par une portion plane correspondante (figure 3) de la face avant du pignon et qui vient s'appliquer sur la rainure et autorise ainsi le passage de l'huile à l'intérieur du synchroniseur 6.

Et chaque poche de stockage du liquide est formée par un creux 17 ou renfoncement réalisé à la jointure entre la paroi latérale externe 10 et la face avant 11 du manchon du moyeu 3 et présentant sur la face avant, un contour en forme de U dont le fond est disposé sensiblement à mi-largeur de la face avant annulaire 11, et les bords forment des sommets de sinusoïdes, et sur la paroi latérale externe 10, un contour en forme de C bombé vers la couronne principale 20 du moyeu 3 et dont le fond est disposé sensiblement au quart de la hauteur de la paroi latérale 10 en partant de la face avant 11.Ce contour en forme de C débouche sur une portion de la paroi latérale 10 bombée à l'opposé de l'axe du moyeu et joignant deux portions planes.

La paroi interne 15M du moyeu selon l'invention est, de façon classique, pourvue de dents axiales sur toute l'épaisseur du manchon 11 et de la couronne principale 20, pour être rendue solidaire en rotation de l'arbre primaire qui comporte des dentelures complémentaires.

La couronne principale 20 comprend une partie interne de laquelle fait saillie le manchon, et qui est annulaire et continue 22, et une partie externe discontinue définissant trois lobes successifs 23, 24, 25 séparés deux à deux par une échancrure 27 disposée dans le prolongement d'un creux 17 formé sur le manchon, ces lobes s'étendant ainsi sur un secteur de 120°.

Chaque lobe 23-25 comprend une partie plane interne 31 et de même épaisseur et contiguë à l'anneau 22, et une partie externe 32 comportant des dents d'engrènement s'étendant selon l'axe du moyeu 3 et d'une longueur supérieure à l'épaisseur de la partie plane 31 du lobe considéré, les deux dents d'extrémité 28 de ce lobe présentant une longueur encore plus importante, et dépassant vis-à-vis des dents centrales, du côté du moyeu 3 faisant face au pignon 4.

Ce moyeu 3 est réalisé par un procédé de frittage selon lequel une poudre métallique hautement compressée est disposée dans un moule de la forme à réaliser, qui est passé dans des fours de cuisson, afin de lier les particules entre elles. Les divers reliefs, et formes du moyeu sont réalisés au sein du moule à l'aide de poissons ou pavés amovibles, qui facilitent la réalisation du moule. Ce moyeu de forme complexe est ainsi réalisé facilement en une unique étape, sans nécessiter d'usinage supplémentaire.

Le pignon 4 comprend un manchon central 36 dont le bord frontal avant forme la face avant du pignon et est destiné à venir en regard de la face avant du moyeu 3, ce manchon 36 faisant saillie d'une couronne principale externe 37 dotée sur sa paroi latérale externe 38 de dents 39 d'engrènement avec la roue correspondante de l'arbre secondaire (non représentée). La paroi latérale interne du pignon est lisse.

Lorsque le moyeu 3 et le pignon 4 ci-dessus décrits sont montés sur l'arbre primaire, tel que représenté sur la figure 1, leurs faces avant 11, 12 portées par leur parties en forme de manchon, définissent ensemble les gorges d'acheminement du liquide depuis l'arbre sur lequel ils sont montés, jusqu'à la périphérie de leurs manchon, périphérie qui coïncide avec le dispositif de synchronisation 6, ainsi que les poches de stockage, dont une seule est représentée qui débouche sur ce dispositif de synchronisation. Le fond 30 d'une poche se retrouve à être constitué par les parties planes restantes des faces avant 11, 12 qui sont effectivement séparées l'une de l'autre par une distance suffisamment faible pour que le liquide de lubrification soit retenu dans ces poches lorsque les arbres de la boîte de vitesse sont à l'arrêt.

L'arbre comporte un trou de lubrification de cage à aiguille par lequel de l'huile de lubrification est délivrée pour alimenter le roulement de cage à huile 42 interposé entre le pignon fou 4 et l'arbre.

Grâce aux gorges formées par les faces avant 11, 12 du moyeu 3 et du pignon 4, l'huile parvenant au roulement 42 le long de la paroi interne 15P du pignon 4, va pouvoir être véhiculée à travers ces gorges, à l'opposé de cette paroi interne 15P puisque ces gorges permettent une communication entre la paroi interne et la paroi externe du manchon du pignon, pour acheminer l'huile vers le synchroniseur 6.

Le synchroniseur pourra ainsi être refroidi pendant son fonctionnement, et un film d'huile pourra en outre être déposé sur les divers cônes de friction, faces d'appui ainsi que sur les dents de manchons et couronnes crabots de ce synchroniseur ce qui évitera la survenance de problèmes de grippage ou d'usure prématurée.

Les gorges vont en outre alimenter en huile les poches périphériques 14 à la redescente de l'huile lorsque la rotation des arbres est à l'arrêt. Dès que la rotation des arbres reprend, ces poches viennent libérer leur contenu en arrosant les éléments périphériques, dont ceux du synchroniseur et le pignon et le moyeu aux mêmes.

Cette action permet de réduire dès les premiers tours des arbres, la friction des surfaces en appui les unes sur les autres des éléments tournants du synchroniseur, sans attendre que le cycle de barbotage classique fasse son effet.

## Revendications

1. Boîte de vitesses d'un véhicule notamment automobile, comprenant :
- un moyeu (3) monté solidaire en rotation autour d'un premier arbre de la boîte de vitesses,
- un pignon (4) monté fou autour de ce même arbre et susceptible d'engrener une roue montée solidaire en rotation autour d'un deuxième arbre de la boîte de vitesses,
le moyeu (3) et le pignon (4) fou définissant respectivement deux faces avant (11, 12) à proximité l'une de l'autre et étant destinés à s'accoupler l'un à l'autre, par l'intermédiaire d'un manchon (7) d'un synchroniseur (6) de la boîte de vitesse, le manchon (7) étant monté autour du moyeu (3) et du pignon (4) lorsqu'un rapport de vitesses est sélectionné, et
- un moyen d'acheminement d'un fluide de lubrification vers des parois latérales internes (15M, 15P) du pignon (4) et du moyeu (3),
dans laquelle les deux faces avant (11, 12) du moyeu (3) et du pignon (4) définissent ensemble au moins une gorge d'acheminement (13) du fluide de lubrification depuis les parois latérales internes (15M, 15P) du moyeu (3) et du pignon (4) jusqu'aux bords latéraux (10) de ces faces avant (11, 12), et au moins une poche de stockage (14) de ce liquide en périphérie de ces faces avant (11, 12) afin de lubrifier le synchroniseur (6),
**caractérisée en ce que** chaque poche de stockage (14) est formée par un creux (17) réalisé dans la face avant (11, 12) du moyeu ou du pignon à partir de la périphérie (10) de cette face (11, 12), et s'arrêtant à distance de la paroi latérale interne (15M, 15P) de ce moyeu ou de ce pignon.

2. Boîte de vitesses selon la revendication 1, **caractérisée en ce que** le moyeu (3) et le pignon (4) comprennent chacun une partie proéminente formant un manchon, les deux manchons pointant l'un vers l'autre par leurs bords frontaux respectifs qui définissent les faces avant (11, 12).

3. Boîte de vitesses selon la revendication 1 ou 2, **caractérisée en ce que** chaque gorge d'acheminement du fluide de lubrification (13) est formée par une rainure (16) réalisée dans la face avant (11, 12) du moyeu ou du pignon et débouchant à la fois sur la paroi latérale interne (15M, 15P) et sur une paroi latérale externe (10) de la face avant (11, 12) du moyeu ou du pignon.

4. Boîte de vitesses selon l'une des revendications précédentes, **caractérisée en ce que** le creux (17) d'une poche de stockage (14) s'étend sur une portion de la paroi latérale externe (10) délimitant la face avant du moyeu ou du pignon.

5. Boîte de vitesses selon l'une des revendications précédentes, **caractérisée en ce que** l'ensemble des rainures (16) et des creux (17) est porté par l'un ou l'autre du moyeu (3) ou du pignon (4).

6. Boîte de vitesses selon la revendication 5, **caractérisée en ce que** le moyeu (3) ou le pignon (4) doté de l'ensemble des rainures (16) et des creux (17) est fabriqué par frittage.

7. Boîte de vitesses selon la revendication 5 ou 6, **caractérisée en ce que** la face avant (12, 11) du pignon (4) ou du moyeu (3) dépourvue de rainures (16) ou de creux (17), est plane.

8. Boîte de vitesses selon l'une des revendications précédentes, **caractérisée en ce qu'**elle comporte en outre un arbre primaire portant le moyeu (3) et le pignon fou (4), un arbre secondaire portant une roue engrenant le pignon fou et un synchroniseur interposé latéralement entre une partie périphérique du moyeu et une partie périphérique du pignon, au niveau de leurs faces avant (11, 12), chaque gorge d'acheminement (13) du fluide de lubrification et chaque poche de stockage de ce fluide (14) débouchant sur le synchroniseur (6) pour l'alimenter en fluide de lubrification.

9. Moyeu de boîte de vitesses comprenant une paroi latérale interne circulaire par laquelle le moyeu est susceptible d'être monté sur un arbre, une paroi latérale externe destinée à être disposée à proximité d'un dispositif de synchronisation, et une face avant destinée à venir en regard d'une face avant d'un pignon, avec lequel le moyeu est susceptible de s'accoupler, **caractérisé en ce que** la face avant (11) du moyeu (3) comprend une rainure (16) débouchant sur la paroi latérale interne (15M) et sur une paroi latérale externe (10) du moyeu et un creux (17) réalisé à partir de la paroi latérale externe (10) de ce moyeu (3) et s'arrêtant à distance de la paroi latérale interne (15 M).

## Patentansprüche

1. Getriebe eines Fahrzeugs, insbesondere eines Kraftfahrzeugs, das Folgendes umfasst:
- eine Nabe (3), die fest in Drehung um eine erste Welle des Getriebes verbunden montiert ist,
- ein Ritzel (4), das frei beweglich um diese Welle montiert ist und in ein Rad eingreifen kann, das fest in Drehung um eine zweite Achse des Getriebes verbunden montiert ist,
wobei die Nabe (3) und das frei laufende Ritzel (4) jeweils zwei Vorderflächen (11, 12) in der Nähe voneinander definieren und dazu bestimmt sind, sich über eine Hülse (7) einer Synchronisierungsvorrichtung (6) des Getriebes aneinander zu koppeln, wobei die Hülse (7) um die Nabe (3) und das Ritzel (4) montiert ist, wenn ein Gang ausgewählt wird, und
- ein Mittel zum Fördern eines Schmierfluids zu inneren Seitenwänden (15M, 15P) des Ritzels (4) und der Nabe (3),
wobei die zwei vorderen Flächen (11, 12) der Nabe (3) und des Ritzels (4) gemeinsam mindestens eine Fördernut (13) des Schmierfluids von den inneren Seitenwänden (15M, 15P) der Nabe (3) und des Ritzels (4) bis zu den Seitenrändern (10) dieser vorderen Flächen (11, 12) definieren, und mindestens eine Lagertasche (14) dieser Flüssigkeit am Umfang dieser vorderen Flächen (11, 12), um die Synchronisierungsvorrichtung (6) zu schmieren, **dadurch gekennzeichnet, dass** jede Lagertasche (14) durch eine Vertiefung (17) gebildet ist, die in der vorderen Fläche (11, 12) der Nabe oder des Ritzels ausgehend von dem Umfang (10) dieser Fläche (11, 12) hergestellt ist und beabstandet von der inneren Seitenwand (15M, 15P) dieser Nabe oder dieses Ritzels endet.

2. Getriebe nach Anspruch 1, **dadurch gekennzeichnet, dass** die Nabe (3) und das Ritzel (4) jeweils einen vorragenden Teil, der eine Hülse bildet, umfassen, wobei die zwei Hülsen durch ihre jeweiligen vorderen Ränder, die die vorderen Flächen (11, 12) definieren, zueinander zeigen.

3. Getriebe nach Anspruch 1 oder 2, **dadurch gekennzeichnet, dass** jede Fördernut des Schmierfluids (13) durch eine Rille (16) gebildet ist, die in der vorderen Fläche (11, 12) der Nabe oder des Ritzels hergestellt ist und sowohl auf der inneren Seitenwand (15M, 15P) als auch auf einer äußeren Seitenwand (10) der vorderen Fläche (11, 12) der Nabe oder des Ritzels mündet.

4. Getriebe nach einem der vorstehenden Ansprüche, **dadurch gekennzeichnet, dass** sich die Vertiefung (17) einer Lagertasche (14) auf einem Abschnitt der äußeren Seitenwand (10), der die vordere Fläche der Nabe oder des Ritzels abgrenzt, erstreckt.

5. Getriebe nach einem der vorstehenden Ansprüche, **dadurch gekennzeichnet, dass** sämtliche Rillen (16) und Vertiefungen (17) von dem einen oder dem anderen der Hülse (3) oder des Ritzels (4) getragen werden.

6. Getriebe nach Anspruch 5, **dadurch gekennzeichnet, dass** die Nabe (3) oder das Ritzel (4), die/das mit allen Rillen (16) und Vertiefungen (17) versehen ist, durch Sintern hergestellt sind.

7. Getriebe nach Anspruch 5 oder 6, **dadurch gekennzeichnet, dass** die vordere Fläche (12, 11) des Ritzels (4) oder der Nabe (3), die keine Rillen (16) oder Vertiefungen (17) aufweist, flach ist.

8. Getriebe nach einem der vorstehenden Ansprüche, **dadurch gekennzeichnet, dass** es außerdem eine Primärwelle umfasst, die die Nabe (3) und das frei laufende Ritzel (4) trägt, wobei eine Sekundärwelle ein Rad trägt, das in das frei laufende Ritzel eingreift trägt, und eine Synchronisierungsvorrichtung, die seitlich zwischen einem umfänglichen Teil der Nabe und einem umfänglichen Teil des Ritzels im Bereich ihrer vorderen Flächen (11, 12) eingefügt ist, wobei jede Fördernut (13) des Schmierfluids und jede Lagertasche dieses Fluids (14) auf der Synchronisierungsvorrichtung (6) münden, um sie mit Schmierfluid zu versorgen.

9. Getriebenabe, die eine kreisförmige innere Seitenwand umfasst, durch die die Nabe auf eine Welle montiert werden kann, eine externe Seitenwand, die dazu bestimmt ist, in der Nähe einer Synchronisierungsvorrichtung angeordnet zu sein, und eine vordere Fläche, die dazu bestimmt ist, gegenüber einer vorderen Fläche eines Ritzels, mit dem die Nabe koppeln kann, zu liegen zu kommen, **dadurch gekennzeichnet, dass** die vordere Fläche (11) der Nabe (3) eine Rille (16) umfasst, die auf der inneren Seitenwand (15M) und auf einer äußeren Seitenwand (10) der Nabe mündet, und eine Vertiefung (17), die ausgehend von der äußeren Seitenwand (10) dieser Nabe (3) hergestellt ist und von der internen Seitenwand (15M) beabstandet endet.

## Claims

1. A transmission of a vehicle, in particular a motor vehicle, including:
- a hub (3) mounted integral in rotation about a first shaft of the transmission,
- a pinion (4) mounted in an idling manner about this same shaft and capable of meshing a wheel mounted integral in rotation about a second shaft of the transmission,
the hub (3) and the idling pinion (4) defining respectively two front faces (11, 12) close to one another and being intended to couple one to the other, by means of a sleeve (7) of a synchromesh (6) of the transmission, the sleeve (7) being mounted around the hub (3) and the pinion (4) when a gear ratio is selected, and
- a means for conveying a lubricating fluid towards internal lateral walls (15M, 15P) of the pinion (4) and of the hub (3),
in which the two front faces (11, 12) of the hub (3) and of the pinion (4) define together at least one groove (13) for conveying the lubricating fluid from the internal lateral walls (15M, 15P) of the hub (3) and of the pinion (4) to the lateral edges (10) of these front faces (11, 12), and at least one storage pocket (14) of this liquid at the periphery of these front faces (11, 12) so as to lubricate the synchromesh (6),
**characterized in that** each storage pocket (14) is formed by a hollow (17) formed in the front face (11, 12) of the hub or of the pinion starting from the periphery (10) of this face (11, 12) and stopping at a distance from the internal lateral wall (15M, 15P) of this hub or of this pinion.

2. The transmission according to Claim 1, **characterized in that** the hub (3) and the pinion (4) each include a prominent part forming a sleeve, the two sleeves pointing towards one another by their respective frontal edges which define the front faces (11, 12).

3. The transmission according to Claim 1 or 2, **characterized in that** each groove (13) for conveying the lubricating fluid is formed by a channel (16) formed in the front face (11, 12) of the hub or of the pinion and opening out both on the internal lateral wall (15M, 15P) and on an external lateral wall (10) of the front face (11, 12) of the hub or of the pinion.

4. The transmission according to one of the preceding claims, **characterized in that** the hollow (17) of a storage pocket (14) extends over a portion of the external lateral wall (10) delimiting the front face of the hub or of the pinion.

5. The transmission according to one of the preceding claims, **characterized in that** the set of channels (16) and hollows (17) is carried by one or other of the hub (3) or of the pinion (4).

6. The transmission according to Claim 5, **characterized in that** the hub (3) or the pinion (4) provided with the set of channels (16) and of hollows (17) is manufactured by sintering.

7. The transmission according to Claim 5 or 6, **characterized in that** the front face (12, 11) of the pinion (4) or of the hub (3) without channels (16) or hollows (17) is flat.

8. The transmission according to one of the preceding claims, **characterized in that** it further comprises a primary shaft carrying the hub (3) and the idling pinion (4), a secondary shaft carrying a wheel meshing the pinion and a synchromesh interposed laterally between a peripheral part of the hub and a peripheral part of the pinion, at the level of their front faces (11, 12), each groove (13) for conveying the lubricating fluid and each storage pocket of this fluid (14) opening out on the synchromesh (6) for supplying it with lubricating fluid.

9. A hub of a transmission including a circular internal lateral wall by which the hub is capable of being mounted on a shaft, an external lateral wall intended to be disposed close to a synchronization device, and a front face intended to come opposite a front face of a pinion, with which the hub is capable of coupling, **characterized in that** the front face (11) of the hub (3) includes a channel (16) opening out on the internal lateral wall (15M) and on an external lateral wall (10) of the hub and a hollow (17) formed starting from the external lateral wall (10) of this hub (3) and stopping a distance from the internal lateral wall (15M).
